# FASCICULE DE BREVET EUROPEEN

(11) **EP 1 418 140 B1**
(45) Date de publication et mention de la délivrance du brevet: **29.06.2005**
(21) Numéro de dépôt: 03292708.9
(22) Date de dépôt: 30.10.2003
(51) Int. Cl.: B65G 17/00, B65G 35/06

(54) **Convoyeurs à accumulation de navettes**
Stauförderer mit Lastenträger
Accumulation conveyor with load carriers

(30) Priorité: 07.11.2002 FR 0213925
(43) Date de publication de la demande: 12.05.2004
(73) Titulaire: ABB MC, 95310 Saint Ouen l'Aumône (FR)
(72) Inventeur: Barreau, Didier, 72140 Sille le Guillaume (FR)
(74) Mandataire: Robert, Jean-Pierre

(56) Documents cités:
- EP-A- 0 316 990
- EP-A- 0 531 610
- FR-A- 2 705 327
- US-A- 5 495 933
- US-B1- 6 237 755

## Description

### DOMAINE DE L'INVENTION

L'invention concerne un perfectionnement aux convoyeurs à accumulation.

### ARRIERE-PLAN DE L'INVENTION

On connaît des convoyeurs de ce type qui comprennent un châssis sur lequel des navettes sont montées pour se déplacer en boucle le long d'une piste de guidage définissant un trajet aller le long duquel un moyen d'immobilisation permet l'arrêt des navettes en regard de postes de travail, et un trajet retour s'étendant sous le trajet aller, avec des portions d'extrémité de piste semi-circulaires pour relier les trajets aller et retour. Le convoyeur comporte un moyen d'entraînement des navettes le long de la piste de guidage, voir par exemple le document FR 2 705 327.

Pour assurer l'entraînement des navettes tout en permettant leur arrêt en regard des postes de travail, le moyen d'entraînement comporte de façon connue en soi une ou plusieurs chaînes montées à défilement sans fin entre deux tambours d'extrémité s'étendant de façon sensiblement parallèle à la piste de guidage des navettes. Ces dernières comportent des roues dentées qui sont montées tournantes avec serrage et qui engrènent avec la ou les chaînes.

Le serrage des roues dentées est assez fort pour empêcher la rotation de celles-ci, de sorte que les navettes sont astreintes à se déplacer avec la ou les chaînes d'entraînement.

Le serrage est néanmoins suffisamment faible pour, lorsque l'une des navettes est stoppée par le moyen d'immobilisation, autoriser la rotation des roues dentées sous l'effet du défilement de la ou des chaînes, ce qui évite de devoir procéder à l'arrêt de ces dernières.

Cette disposition se révèle onéreuse en raison du nombre de pièces usinées. Par ailleurs, le serrage des roues dentées tend à diminuer au fur et à mesure de l'usure des éléments de friction assurant ledit serrage, ce qui finit par provoquer un défaut d'entraînement des navettes nécessitant une intervention de maintenance lourde pour remplacer les pièces mécaniques usées.

### OBJET DE L'INVENTION

L'invention vise à proposer un convoyeur à accumulation avec un moyen d'entraînement simplifié.

### BREVE DESCRIPTION DE L'INVENTION

On propose ainsi, sur un convoyeur à accumulation qui comprend un châssis sur lequel des navettes sont montées pour se déplacer en boucle le long d'une piste de guidage définissant un trajet aller le long duquel un moyen d'immobilisation permet l'arrêt des navettes en regard de poste de travail, et un trajet retour s'étendant sous le trajet aller, avec des portions d'extrémité de piste semi-circulaires pour relier les trajets aller et retour, de disposer un moyen d'entraînement des navettes le long de la piste de guidage qui, selon l'invention, comprend d'une part au moins un élément d'entraînement sans fin monté entre deux tambours d'extrémité, et d'autre part des patins élastiquement déformables disposés sur les navettes pour être pressés en permanence contre l'élément d'entraînement sans fin.

La pression ainsi organisée entre l'élément d'entraînement sans fin et le patin permet de générer un effort suffisant pour permettre l'entraînement de la navette concernée, mais insuffisant pour bloquer l'élément d'entraînement sans fin lorsque la navette est stoppée par le moyen d'immobilisation.

On réalise donc la même fonction que celle assurée par les roues dentées de l'art antérieur, mais avec des moyens bien plus simples que ceux de l'art antérieur, permettant d'éliminer la maintenance consécutive à l'usure des éléments mécaniques de l'art antérieur.

Selon une disposition avantageuse, le convoyeur comporte un moyen d'ajustement de la pression qu'exercent les patins sur l'élément d'entraînement sans fin. Cette disposition permet d'ajuster l'effort d'entraînement exercé par l'élément d'entraînement sans fin sur les navettes, par exemple en fonction de la charge portée par ces dernières.

Selon un mode particulier de réalisation, les patins ont une face en regard de l'élément d'entraînement sans fin qui est préformée selon une surface homologue au profil de l'élément d'entraînement sans fin. Cette disposition permet d'augmenter, pour une pression donnée, l'effort d'entraînement des navettes exercé par l'élément d'entraînement sans fin.

Selon une disposition avantageuse, les moyens d'entraînement comportent un moyen de soutien de l'élément d'entraînement sans fin entre les tambours d'extrémité.

Ainsi, la réaction à la pression de l'élément élastiquement déformable n'est pas obtenue par une tension additionnelle de l'élément d'entraînement sans fin, mais par l'intermédiaire du moyen de soutien.

En outre, le moyen de soutien permet de limiter la flèche de l'élément d'entraînement sans fin sous l'effet de la pression de l'élément élastiquement déformable.

Selon un mode particulier de réalisation de l'invention, l'élément d'entraînement sans fin comporte des galets d'entraînement montés fou qui saillent de l'élément d'entraînement sans fin pour former un appui des patins des navettes.

Les galets d'entraînement forment ainsi des reliefs sur lesquels s'impriment les patins, ce qui favorise la génération d'un effort d'entraînement des patins par l'élément d'entraînement sans fin.

Par ailleurs, lorsque une navette est opposée, les galets d'entraînement roulent sous le ou les patins de ladite navette. Le ou les patins ne subissent ainsi aucune contrainte d'arrachement, mais uniquement des contraintes d'écrasement, ce qui leur procure une grande durée de vie.

Selon un aspect supplémentaire de l'invention, au moins un tambour d'extrémité comporte un moyen de blocage en rotation des galets d'entraînement.

Le blocage en rotation des galets d'entraînement permet d'augmenter l'effort généré entre les galets d'entraînement et les patins des navettes engagées dans la portion d'extrémité de piste correspondante. Cette augmentation d'effort permet un entraînement efficace des navettes en contrant par un supplément de frottement l'effet du poids qui a tendance à accélérer (portion d'extrémité de piste descendante) ou ralentir (portion d'extrémité de piste montante) le mouvement des navettes vis à vis de la vitesse de défilement de l'élément d'entraînement sans fin.

Selon un mode de réalisation de l'invention, le moyen de blocage comprend une bande de freinage disposée sur le tambour d'extrémité de façon à être pressée contre les galets d'entraînement de l'élément d'entraînement sans fin.

Le blocage en rotation des galets d'entraînement est obtenu simplement par frottement entre les galets d'entraînement et la bande de freinage.

De préférence, le tambour comporte un moyen d'ajustement de l'effort de pression de la bande de freinage sur les galets d'entraînement.

D'autres caractéristiques et avantages de l'invention apparaîtront plus clairement à la lumière de la description qui suit d'un mode de réalisation particulier non limitatif de l'invention, en référence aux figures annexées parmi lesquelles :

### BREVE DESCRIPTION DES DESSINS

- la figure 1 est une vue schématique partielle d'un convoyeur à accumulation selon l'invention;
- la figure 2 est une vue en coupe d'un mode de réalisation d'un convoyeur à accumulation selon l'invention ;
- la figure 3 est une vue partielle agrandie de la figure 2 illustrant le montage des patins sur les navettes ;
- la figure 4 est une vue analogue à la figure 4 d'une variante de réalisation du montage des patins sur les navettes ;
- la figure 5 est une vue analogue à celle de la figure 2, la coupe étant faite au niveau d'une des portions d'extrémité de piste.

### DESCRIPTION DETAILLEE DE L'INVENTION

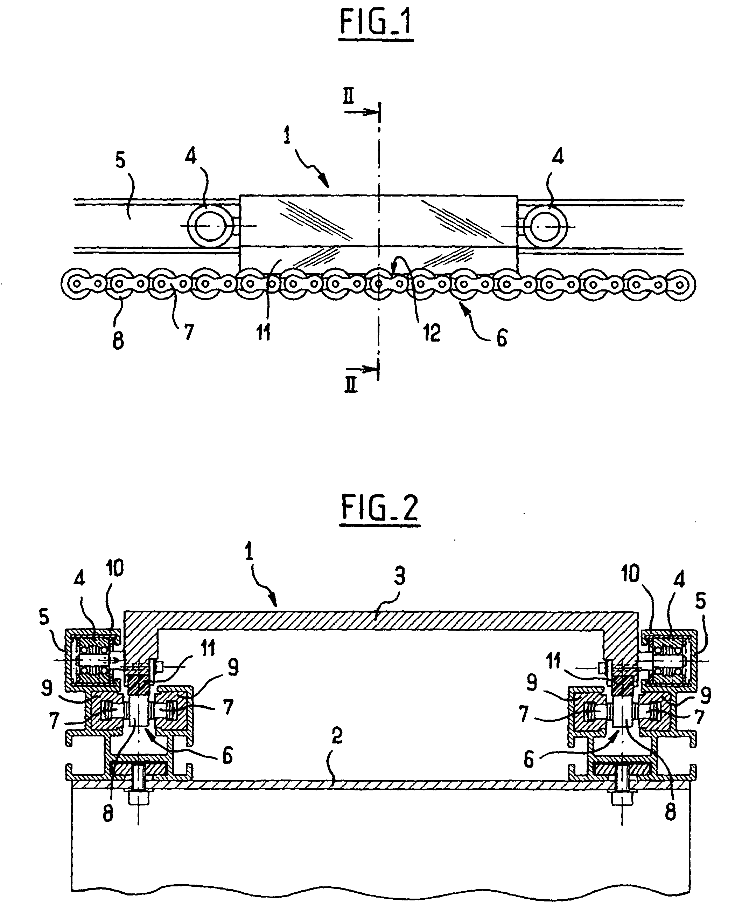

En référence à la figure 1, un convoyeur à accumulation selon l'invention comporte des navettes 1 montées mobiles sur un châssis 2, chacune des navettes 1 comportant un plateau 3 pour la réception d'objets à convoyer et des galets de guidage 4 supportant la navette qui roulent dans une piste de guidage 5 délimitant les trajets allers et retour des navettes 1.

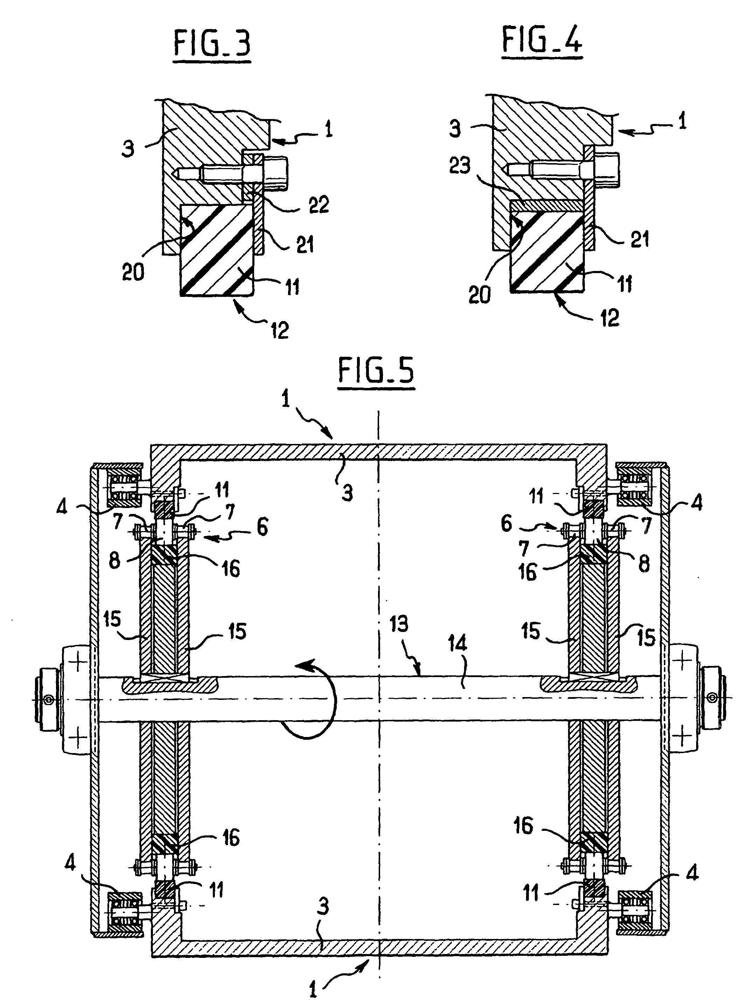

Selon l'invention, le convoyeur comporte un moyen d'entraînement comprenant deux éléments d'entraînement sans fin 6 montés à défilement sur des tambours d'extrémité non représentés ici (l'un des tambours est visible à la figure 5), les éléments d'entraînement sans fin 6 s'étendant de façon sensiblement parallèle à la piste de guidage 5.

Comme cela est visible à la figure 2, chacun des éléments d'entraînement sans fin 6 est composé de deux chaînes parallèles de maillons 7, les maillons d'une chaîne étant solidarisés aux maillons de l'autre chaîne au moyen d'axes transversaux portant des galets d'entraînement 8 intermédiaires. Les galets d'entraînement 8 sont libres de tourner sur leur axe et saillent largement de part et d'autre des chaînes 7.

Le long des trajets aller et retour, les chaînes 7 de chacun des éléments d'entraînement sans fin 6 sont engagées dans des guides 9, parallèles aux pistes de guidage 5. De façon avantageuse, la piste de guidage 5 et les guides 9 sont constitués par un seul et même profilé 10 fixé au châssis du convoyeur par de simples vis, ce qui simplifie considérablement la fabrication du convoyeur.

Le moyen d'entraînement comporte par ailleurs, disposés sur chacune des navettes 1, deux patins 11 en matière élastiquement déformable, par exemple en élastomère. Les patins 11 sont disposés sur les navettes 1 de façon à être pressés contre les galets d'entraînement 8 des éléments d'entraînement sans fin 6.

L'effort de pression entre les galets d'entraînement 8 et les patins 11 est contré, pour ce qui concerne la navette 1 associée, par un effort de réaction des galets de guidage 4 contre la piste de guidage 5, et pour ce qui concerne l'élément d'entraînement sans fin 6, par un effort de réaction des chaînes 7 contre les guides 9, qui forment ainsi un soutien de l'élément d'entraînement sans fin 6 permettant de limiter la flèche de celle-ci.

Lorsque la navette 1 n'est pas stoppée par le moyen d'immobilisation (non représenté), la face 12 du patin 11 en regard de l'élément d'entraînement sans fin 6 associé prend une forme en vagues épousant le contour des galets d'entraînement 8 qu'elle recouvre. Les galets d'entraînement 8 prennent en quelque sorte appui sur la forme en vagues ainsi constituée pour entraîner la navette 1, la tendance à rouler des galets d'entraînement 8 étant contrariée par la résistance à l'écrasement qu'oppose la partie du patin 11 s'étendant entre les galets d'entraînement 8. Cette résistance au roulement des galets d'entraînement 8 permet l'entraînement des navettes 1 par les éléments d'entraînement sans fin 6.

Pour augmenter cette résistance au roulement, la face 12 du patin 11 peut être préformée selon l'invention pour lui donner une forme en vague homologue au profil des galets d'entraînement 8. Dans ce cas, la face 12 du patin 11 présente, avant son montage sur la navette 1, une forme similaire à celle qui est représentée à la figure 1.

Lorsque la navette 1 est stoppée par le moyen d'immobilisation, les galets d'entraînement 8 roulent au contact de la face 12 du patin 11 qui se déforme progressivement au passage desdits galets d'entraînement 8, en opposant peu de résistance.

Il est à noter que le roulement des galets d'entraînement 8 contre la surface 12 des patins 11 permet de ménager ces derniers qui subissent essentiellement une faible contrainte d'écrasement.

Selon un aspect particulier de l'invention, l'effort de friction généré par l'élément d'entraînement sans fin 6 sur les navettes 1 le long des trajets aller et retour est modulable par réglage de la pression du patin 11 sur l'élément d'entraînement sans fin 6. A cet effet, et selon une première variante représentée à la figure 3, on prévoit un moyen de compression axiale du patin 11. Ce dernier est ainsi enserré axialement entre une face latérale 20 de la navette 1, et une plaque de serrage 21 rapportée sur la navette 1 au moyen de vis, la compression axiale du patin 11 étant ajustée au moyen d'une cale de réglage 22 disposée entre la navette 1 et la plaque de serrage 21.

La compression axiale du patin provoque l'expansion radiale de celui-ci. Plus le patin est compressé axialement, plus il s'expanse radialement, et plus il appuie sur l'élément d'entraînement sans fin 6.

Selon une deuxième variante représentée à la figure 4, La modulation de l'effort de friction généré par l'élément d'entraînement sans fin 6 sur les navettes 1 le long des trajets aller et retour est obtenue en interposant une cale 23 d'épaisseur requise entre le patin 11 et la navette 1 associée.

Comme cela est visible à la figure 5, les éléments d'entraînement sans fin 6 sont montés sur un tambour d'extrémité 13 comprenant un arbre 14 qui porte deux paires de roues dentées 15 arrêtées en rotation sur l'arbre 14. Chacune des roues dentées 15 reçoit l'une des chaînes 7 des éléments d'entraînement sans fin 6.

Selon un aspect supplémentaire de l'invention, une bande de freinage 16 en matériau élastiquement déformable est disposée entre les roues dentées 15, de sorte que les galets d'entraînement 8 associés aux maillons engagés sur les roues dentées 15 soient pressés contre la bande de freinage 16.

Cette pression a pour effet d'immobiliser fermement les galets d'entraînement 8 en rotation. L'effort d'entraînement que les galets d'entraînement 8 sont capables de générer sur les patins 11 s'en trouve notablement augmenté.

L'augmentation de l'effort d'entraînement permet de lutter contre l'effet du poids des navettes au passage des portions d'extrémité de piste, en retenant les navettes dans la portion descendante et en entraînant les navettes dans la portion montante.

Le réglage de l'effort d'entraînement généré par l'élément d'entraînement sans fin 6 sur les navettes 1 dans les portions d'extrémité de piste est réalisé en prévoyant une possibilité de compression axiale de la bande de freinage 16. Plus la bande de freinage 16 est compressée axialement, plus elle s'expanse radialement et plus l'effort de pression de la bande de freinage 16 sur les galets d'entraînement 8 est important.

La compression axiale est ici organisée simplement en prévoyant un moyen de déplacement axial des roues dentées 15 d'une même paire sur l'arbre 14 (non représenté), autorisant leur rapprochement ou leur éloignement. Les flancs des roues dentées 15 exercent alors sur la bande de freinage 16 un effort de compression plus ou moins grand.

Ainsi, l'utilisation selon l'invention d'éléments d'entraînement sans fin à galets d'entraînement et de patins déformables disposés sur les navettes permet, d'une façon très simple, d'organiser l'entraînement des navettes le long des trajets aller et retour avec possibilité d'arrêt des navettes, ainsi que l'entraînement des navettes dans les portions d'extrémités de piste.

L'invention n'est pas limitée au mode particulier de réalisation décrit, mais englobe toute variante entrant dans le cadre de l'invention tel que défini par les revendications.

En particulier, bien que l'on ait illustré l'invention au moyen d'un convoyeur à deux éléments d'entraînement sans fin, l'invention englobe les convoyeurs à un seul élément d'entraînement sans fin, disposé par exemple au centre du convoyeur. Chacune des navettes ne comporte alors qu'un patin central.

Bien que dans le mode particulier de réalisation illustré, chacune des navettes comporte deux patins, chacun des patins coopérant avec un élément d'entraînement sans fin, il est également possible, dans le cadre de l'invention, de prévoir que deux patins soient disposés l'un derrière l'autre sur au moins une navette pour coopérer avec le même élément d'entraînement sans fin. Cette disposition permet d'augmenter l'effort d'entraînement de la navette correspondante exercé par l'élément d'entraînement sans fin.

## Revendications

1. Convoyeur à accumulation comprenant un châssis sur lequel des navettes (1) sont montées pour se déplacer en boucle le long d'une piste de guidage (5) définissant un trajet aller le long duquel un moyen d'immobilisation permet l'arrêt des navettes (1) en regard de postes de travail, et un trajet retour s'étendant sous le trajet aller, avec des portions d'extrémité de piste semi-circulaires pour relier les trajets aller et retour, le convoyeur comportant un moyen d'entraînement des navettes (1) le long de la piste de guidage (5), **caractérisé en ce que** le moyen d'entraînement comprend d'une part au moins un élément d'entraînement sans fin (6) monté à défilement sans fin entre deux tambours d'extrémité (13), et d'autre part au moins un patin (11) élastiquement déformable disposé sur chacune des navettes (1) de façon à être pressé en permanence contre l'élément d'entraînement sans fin (6).

2. Convoyeur selon la revendication 1, **caractérisé en ce qu'**il comporte un moyen d'ajustement (22 ; 23) de la pression qu'exercent les patins (11) sur l'élément d'entraînement sans fin (6).

3. Convoyeur selon la revendication 1, **caractérisé en ce que** les patins (11) ont une face (12) en regard de l'élément d'entraînement sans fin qui est préformée selon une surface homologue au profil de l'élément d'entraînement sans fin (6).

4. Convoyeur selon la revendication 1, **caractérisé en ce que** le moyen d'entraînement comporte un moyen de soutien (9) de l'élément d'entraînement sans fin (6) le long des trajets aller et retour.

5. Convoyeur selon la revendication 1, **caractérisé en ce que** l'élément d'entraînement sans fin (6) comporte des galets (8) montés fou et qui saillent de l'élément d'entraînement sans fin (6) de façon à former un appui pour le patin (11) des navettes (1).

6. Convoyeur selon la revendication 5, **caractérisé en ce qu'**au moins un tambour d'extrémité (13) comporte un moyen de blocage (16) des galets d'entraînement (8) en rotation autour de leur axe.

7. Convoyeur selon la revendication 6, **caractérisé en ce que** le moyen de blocage est constitué d'une bande de freinage (16) des galets d'entraînement (8), disposée sur le tambour d'extrémité (13) pour exercer sur les galets d'entraînement (8) une pression apte à les immobiliser en rotation.

8. Convoyeur selon la revendication 7, **caractérisé en ce qu'**il comporte un moyen d'ajustement de la pression qu'exerce la bande de freinage (16) sur les galets d'entraînement (8).

## Patentansprüche

1. Stauförderer, umfassend einen Rahmen, an dem Förderschlitten (1) zur Bewegung in einer Schleife entlang einer Führungsbahn (5) montiert sind, die eine Hinstrecke definiert, entlang der Feststellmittel das Anhalten der Förderschlitten (1) gegenüber von Arbeitsplätzen ermöglichen, sowie eine Rückstrecke, die unter der Hinstrecke verläuft, mit halbkreisförmigen Bahnendabschnitten zur Verbindung der Hinstrecke mit der Rückstrecke, wobei der Förderer Antriebsmittel zum Antrieb der Förderschlitten (1) entlang der Führungsbahn (5) umfasst, **dadurch gekennzeichnet, dass** die Antriebsmittel einerseits mindestens ein endloses Antriebselement (6) umfassen, das derart montiert ist, dass es endlos zwischen zwei Endtrommeln (13) läuft, sowie andererseits mindestens einen elastisch verformbaren Gleitschuh (11), der an jedem der Förderschlitten (1) so angeordnet ist, dass er permanent gegen das endlose Antriebselement (6) gedrückt wird.

2. Förderer nach Anspruch 1, **dadurch gekennzeichnet, dass** er Einstellmittel (22; 23) zum Einstellen des Druckes umfasst, den die Gleitschuhe (11) auf das endlose Antriebselement (6) ausüben.

3. Förderer nach Anspruch 1, **dadurch gekennzeichnet, dass** die Gleitschuhe (11) eine dem endlosen Antriebselement gegenüberliegende Fläche (12) haben, die entsprechend einer homologen Oberfläche am Profil des endlosen Antriebselements (6) vorgeformt ist.

4. Förderer nach Anspruch 1, **dadurch gekennzeichnet, dass** die Antriebsmittel Stützmittel (9) zum Stützen des endlosen Antriebselements (6) entlang der Hin- und Rückstrecke umfassen.

5. Förderer nach Anspruch 1, **dadurch gekennzeichnet, dass** das endlose Antriebselement (6) beweglich gelagerte Rollen (8) umfasst, die vom endlosen Antriebselement (6) derart hervorstehen, dass sie eine Auflage für den Gleitschuh (11) der Förderschlitten (1) bilden.

6. Förderer nach Anspruch 5, **dadurch gekennzeichnet, dass** mindestens eine Endtrommel (13) Blockierungsmittel (16) umfasst, um die Antriebsrollen (8) in deren Drehbewegung um deren Achse zu blockieren.

7. Förderer nach Anspruch 6, **dadurch gekennzeichnet, dass** die Blockierungsmittel von einem Bremsband (16) zum Bremsen der Antriebsrollen (8) gebildet sind, das an der Endtrommel (13) angeordnet ist, um auf die Antriebsrollen (8) einen Druck auszuüben, der dazu geeignet ist, diese in ihrer Drehbewegung zu blockieren.

8. Förderer nach Anspruch 7, **dadurch gekennzeichnet, dass** er Einstellmittel zum Einstellen des Druckes umfasst, den das Bremsband (16) auf die Antriebsrollen (8) ausübt.

## Claims

1. An accumulating conveyor comprising a frame o n which shuttles (1) are mounted to travel in a loop along a guide track (5) defining a go path along which immobilization means enable the shuttles (1) to be stopped in register with workstations, and a return path extending under the go path, with semicircular end portions of the track for interconnecting the go and return paths, the conveyor including drive means for driving the shuttles (1) along the guide track (5), the conveyor being **characterized in that** the drive means comprise firstly at least one endless drive element (6) mounted to travel endlessly between two end drums (13), and secondly at least one elastically deformable shoe (11) disposed on each of the shuttles (1) so as to be pressed permanently against the endless drive elements (6).

2. A conveyor according to claim 1, **characterized in that** it includes adjustment means (22; 23) for adjusting the pressure exerted by the shoes (11) on the endless drive element (6).

3. A conveyor according to claim 1, **characterized in that** each shoe (11) has a face (12) facing the endless drive element that is pre-shaped to have a surface complementary to the profile of the endless drive element (6).

4. A conveyor according to claim 1, **characterized in that** the drive means include support means (9) for supporting the endless drive element (6) along the go and return paths.

5. A conveyor according to claim 1, **characterized in that** the endless drive element (6) includes idler wheels (8) projecting from the endless drive element (6) so as to have the shoes (11) of the shuttles (1) pressed against them.

6. A conveyor according to claim 5, **characterized in that** at least one end drum (13) includes blocking means (16) for preventing the drive wheels (8) turning about their axes.

7. A conveyor according to claim 6, **characterized in that** the blocking means is constituted by a brake band (16) for braking the drive wheels (8), the band being disposed on the end drum (13) to exert pressure on the drive wheels (8) suitable for preventing them from rotating.

8. A conveyor according to claim 7, **characterized in that** it includes adjustment means for adjusting the pressure exerted by the brake band (16) on the drive wheels (8).
